# EUROPEAN PATENT APPLICATION

(11) **EP 3 875 745 A1**
(43) Date of publication of application: **08.09.2021**
(21) Application number: 20160680.3
(22) Date of filing: 03.03.2020
(51) Int. Cl.: F02M 19/06, F02M 37/48, F02M 37/34, F02M 61/16, B01D 29/00

(54) **ELECTROMAGNETIC FUEL VALVE**

(71) Applicant: Andreas Stihl AG & Co. KG, 71336 Waiblingen (DE)
(72) Inventor: OSBURG, Gerhard, 71394 Kernen (DE); AMES, Erik, 71334 Waiblingen (DE); MASCHKE, Christoph, 73104 Börtlingen (DE); DIETENBERGER, Michael, 71334 Waiblingen (DE); REICHLER, Mark, 73630 Remshalden, (DE); SUZUKI, Daisuke, Morioka Iwate (JP); IWASA, Yoshiharu, Hachimantai Iwate (JP); TODA Mamoru,, 0200015 Morioka Iwate, (JP)
(74) Representative: Zurhorst, Stefan

(57) **Abstract**

Summary

The invention relates to an electromagnetic fuel valve (2) in particular of a carburetor (1), comprising a valve base body (4) extending along a longitudinal axis (3) and having a generally circular cross section, further comprising at least one inlet channel (5) and at least one outlet channel (7). A fuel guiding delivery section (8) with at least one inlet port (6) of the inlet channel (5) is formed on the outer side of the valve base body (4). The inlet port (6) is externally covered by a filter element (9). The filter element (9) is embodied as a C-shaped part having a filter section (10) and an open side (11), and being externally snapped onto the delivery section (8).

## Description

The invention relates to an electromagnetic fuel valve according to the preamble of claim 1.

Within the fuel supply of combustion engines fluid control means in form of an electromagnetic fuel valve are widely used. In particular, the gas driven motors of handheld working tools like chain saws or the like have a carburetor which is supplied with fuel in a controlled manner through an electromagnetic fuel valve.

The entire fuel system is prone to clogging due to impurities within the passing fuel and residual metal chips from fuel valve machining and from other parts of the fuel supply system. In order to prevent clogging such fuel valves are usually equipped with a fuel filter element. Due to limited space the fuel valves and filter elements need to have a compact design while maintaining accessibility of the filter element for service purposes.

WO 2006/016056 A1 discloses an electromagnetic fuel valve comprising a valve base body extending along a longitudinal axis and having a generally circular cross section. The valve receives fuel from an inlet channel and controls the fuel flow by means of an electromagnetic actuator. The controlled fuel flow is delivered through an outlet channel. The inlet channel has an inlet port being formed on the circumferential outer side of the valve base body, and being externally covered by a cylindrical filter element. Assembly and disassembly of the cylindrical filter element for mounting and service purposes requires an axial relative movement which, as a prerequisite, requires a sufficient narrow free end of the valve base body over which the cylindrical filter element can be passed in an axial direction. The need for a sufficient narrow valve body end is an undesired constraint in designing the valve. Furthermore, the accessibility for mounting and service purposes is suboptimal.

The object of the present invention is to improve an electromagnetic fuel valve in terms of filter assembly and disassembly within a compact design.

The object is solved by an electromagnetic fuel valve as defined in claim 1.

According to the invention an electromagnetic fuel valve is proposed, wherein the filter element is embodied as a C-shaped part having a filter section and an open side, and being externally snapped onto the delivery section of the inlet channel on the outer side of the valve base body.

The C-shape allows for an elastic widening of the filter element in the radial direction. In consequence the filter element can be snapped onto the valve base body either in the axial or in the radial direction without significant effort. Disassembly for cleaning or replacement of the filter element is possible in the same way. In a snapped-on state there is no need for additional and dedicated fixing means. The filter element cannot fall off the filter base body even in a dismounted state of the valve. The valve body itself is not subjected to design constraints in terms of body end diameter for passing along a prior art fixed diameter filter sleeve.

In a preferred embodiment of the invention the fuel guiding delivery section formed on the outer side of the valve base body comprises a circumferential surface having the at least one inlet port and being enclosed by the filter section of the filter element. Furthermore, a positioning protrusion elevates radially above the circumferential surface and engages with the open side of the C-shaped filter element.

The engagement of the positioning protrusion with the open side of the C-shaped filter element forces said filter element in an exact mounting position related to the circumferential direction. Thereby it is made sure that the inlet port is covered by the filter section and not by the open side of the filter element. A wrong mounting of the filter element is excluded while it is assured, that the inlet port receives nothing but well filtered fuel.

Filter section and circumferential surface of the delivery section may have varying shapes. However, in a preferred embodiment both the filter section and the circumferential surface are embodied in a partial cylindrical shape. Thereby, a continuous gap with an at least approximate constant radial distance between both is achieved. This allows for an undisturbed and free flow of the filtered fuel on the clean side of the filter element.

In a preferred embodiment the filter section of the filter element is kept in an inner radial distance to said circumferential surface by inner distance means. The aforementioned free fuel flow is kept even under high pressure differences between the outer and inner side of the filter element which may occur under high flow rates and/or under dirty conditions with a partially clogged filter element.

Adjacent to the open side and on both sides thereof the filter element comprises each one end section, with the end sections compassing the filter section in the circumferential direction. In one advantageous embodiment the filter element comprises at least one and preferably two radially inwards protruding bends in the range of the end sections to form two inner distance means. Preferably, opposite to the open side the filter section comprises a radially inwards protruding dent to form an inner distance means. In a preferred alternative, opposite to the open side the filter section comprises a radially inwards protruding bend to form an inner distance means. In particular, a total of three inner distance means is present, although a different number of inner distance means might be preferable. A radial positioning of the filter section relative to the fuel delivery section and precise distance keeping between both is reliably achieved. A fuel flow jamming contact between the filter section and the circumferential surface of the fuel guiding delivery section is reliably prevented.

In a further preferred embodiment the filter section of the filter element comprises outer distance means for keeping an outer radial distance to an inner circumferential wall of a surrounding fuel valve housing. Said outer radial distance means avoid an unwanted contact of the filter section with the surrounding circumferential wall thereby avoiding obstruction of certain filter areas. The entire filter section is exposed to the incoming fresh and unfiltered fuel stream, thereby providing full and unobstructed filter performance.

In preferred embodiments the filter section comprises adjacent to the open side at least one and in particular two outer distance means. Preferably, said outer distance means are either radially outward protruding dents or radially outward protruding bends. While easy to produce such embodiments reliably perform in their function to maintain the desired distance.

In a further aspect of the invention the delivery section is preferably delimited in the axial direction by two shoulders between which the filter element is held. The resultant positive locking fit keeps the filter element safely in place without the need for additional fixing means. A first axial length of the filter section of the filter element is preferably less than a second axial length of the delivery section by a first axial gap width. Said gap allows an easy mounting and disassembly of the filter element while leaving not too much space for unwanted debris to pass. In other words, the gap contributes to the filtering effect by acting as a gap filter.

The filter element itself may be embodied as a woven filter, a pinhole filter or in any other suitable way. Preferably, the filter section of the filter element is embodied as a gap filter with individual filter gaps. In particular, said filter gaps have a second axial gap width being in a range from including 0,05 mm to including 0,15 mm. Such filter design has turned out to provide a high filter performance with low flow drag. With the filter gaps oriented in the circumferential direction the remaining filter material provides sufficient mechanical strength and stiffness, which contributes to a reliable clip-on design of the filter element.

Adjacent to the open side the filter element is preferably bent radially outwards to form a mounting bevel. This helps to clip the filter element onto the valve base body. Potential sharp edges of the filter element are kept away from the base body surface, thereby avoiding unwanted generation of chips.

The C-shaped filter element is preferably embodied as a bent sheet metal part or, in the alternative, as a molded plastic part. In both cases a single piece, easy to manufacture filter element is provided, while avoiding the disadvantages of e.g. mesh filters with single wires coming loose.

Example embodiments of the invention are described infra under reference to the drawing, wherein
- Fig. 1: shows in a side view an inventive electromagnetic fuel valve in a mounted state,
- Fig. 2: shows in a perspective exploded view the fuel valve of Fig. 1 with a disassembled inventive C-shaped filter element,
- Fig. 3: shows in a perspective view the C-shaped filter element of Fig. 2 with further details of its design including dents to provide distance means,
- Fig. 4: shows an alternative embodiment of a C-shaped filter element with bends to provide distance means,
- Fig. 5: shows in an enlarged side view the filter element section of the electromagnetic fuel valve with geometric details of filter gaps, and
- Fig. 6: shows in a front view the assembly of Fig. 1 with details of inner and outer radial distances of the filter element to the adjacent surfaces.

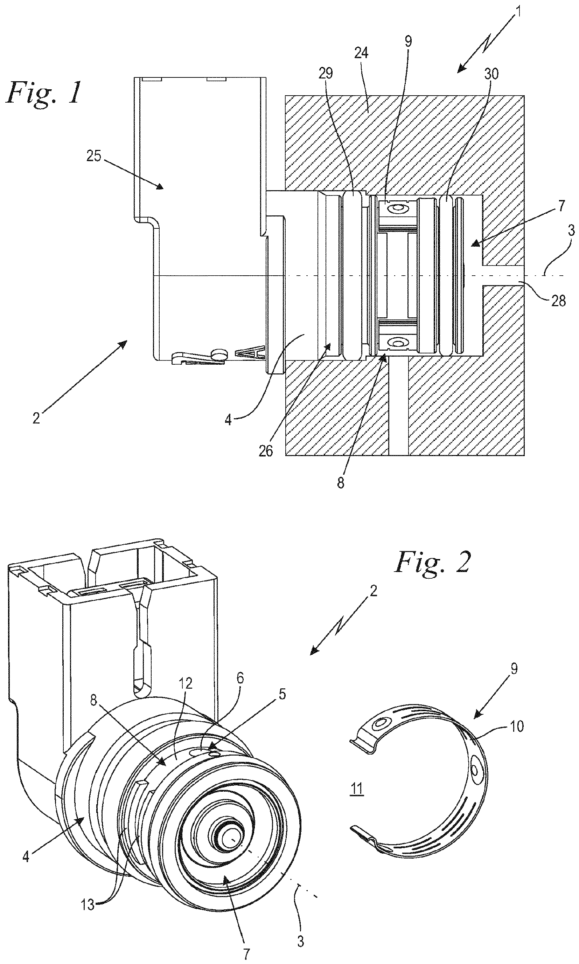

Fig. 1 shows in a side view an example embodiment of an inventive electromagnetic fuel valve 2 as part of the fuel supply of a combustion engine. In the shown embodiment the electromagnetic fuel valve 2 is part of a schematically indicated carburetor 1 within a handheld work apparatus to supply a piston engine with a fuel-air-mixture.

The electromagnetic fuel valve 2 has an electric connection portion 25 and a valve portion 26. The valve portion 26 is immersed in a schematically indicated valve housing 24 as part of the carburetor 1. The valve housing 24 and the carburetor 1 may however be separate parts. The valve housing 24 has an incoming fuel input channel 27 and an outgoing fuel output channel 28. In operation, a fuel flow from and through the fuel input channel 27 to and through the fuel output channel 28 is controlled by means of the electromagnetic fuel valve 2.

Within the valve portion 26, the electromagnetic fuel valve 2 has a valve base body 4 which extends along a longitudinal axis 3 and which has a generally circular cross section. A corresponding circular cavity in the valve housing 24 receives said valve base body 4. Two O-rings 29, 30 are mounted to the valve base body 4 on either axial side of the fuel input channel 27, and are in contact with the outer circumferential wall of the valve housing 24. Thereby, the valve housing 24 and the two O-rings 29, 30 confine a fuel guiding delivery section 8 on the outer side of the valve base body 4. The fuel input channel 27 opens into the delivery section 8, which extends along the entire circumference of the valve base body 4. Furthermore, a filter element 9 is disposed on the outer side of the valve base body 4 within the fuel guiding delivery section 8 such, that the incoming fuel from the fuel input channel 27 passes through the filter element 9 into the valve base body 4, and leaves the valve base body 4 through an outlet channel 7, after which it is discharged through the fuel output channel 28.

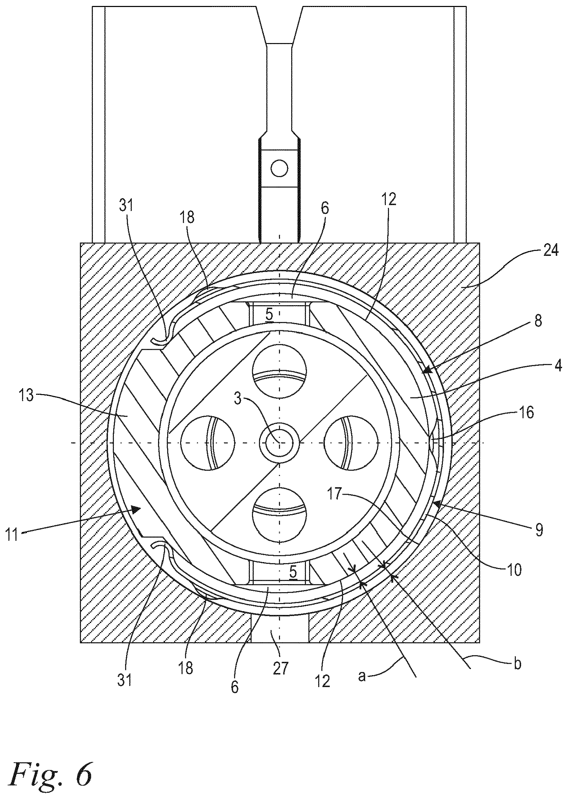

Fig. 2 shows the electromagnetic fuel valve 2 of Fig. 1 in a perspective exploded view, wherein the filter element 9 is separated from the valve base body 4. It can be seen that the fuel guiding delivery section 8 is formed on the outer side of the valve base body 4, from which at least one inlet port 6 leads into a corresponding inlet channel 5, the inlet channel 5 being oriented in a radial direction relative to the longitudinal axis 3. The corresponding outlet channel 7 leaves the valve base body 4 parallel to the longitudinal axis 3 on the base body's front end. Together with Fig. 6 it can be seen, that a total of two inlet channels 5 with two inlet ports 6 is provided on opposite sides of the longitudinal axis 3.

The filter element 9 is embodied as a C-shaped part having a filter section 10 and an open side 11. In the mounted state of Figs. 1, 5, 6 the C-shaped filter element 9 is snapped onto the valve base body 4 within the fuel guiding delivery section 8, wherein the inlet ports 6 (Figs. 2, 6) are externally covered by said filter element 9.

As a further detail, Fig. 2 shows that the fuel guiding delivery section 8 comprises a circumferential surface 12 of the valve base body 4, in which the at least one inlet port 6 is formed. Furthermore, at least one, here two positioning protrusions 13 elevate radially above the circumferential surface 12. In the mounted state of Figs. 1, 5, 6 the at least one positioning protrusion 13 engages with the open side 11 of the C-shaped filter element 9. Thereby, the filter element 9 is positioned in the circumferential direction such, that the inlet ports 6 are not left unprotected by the open side 11, but are covered and protected by the filter section 10 of the filter element 9.

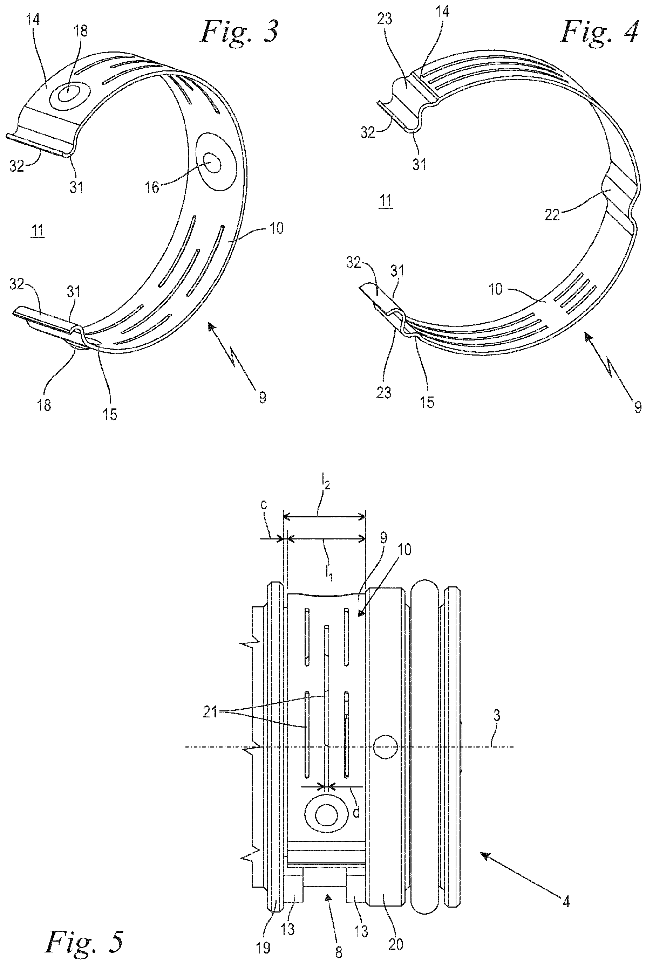

Fig. 3 shows in an enlarged view the C-shaped filter element 9 of Figs 1, 2 with further details. Together with Fig. 6 it can be seen, that the filter section 10 of the filter element 9 is kept in an inner radial distance a to the circumferential surface 12 of the base body 4 at the location of the fuel guiding delivery section 8 by inner distance means. Furthermore, the filter section 10 of the filter element 9 comprises outer distance means for keeping an outer radial distance b to an inner circumferential wall 17 of the surrounding fuel valve housing 24 (Fig. 6).

Referring back to Fig. 3, it can be seen that adjacent to the open side and on both sides thereof the filter element 9 comprises each one end section 14, 15, at which the filter section 10 terminates in the circumferential direction. In the range of the end sections 14, 15 the filter element 6 comprises each one a radially inward protruding bend 31, thereby forming two of the aforementioned inner distance means. In addition, the filter section 10 comprises opposite to the open side 11 a radially inwards protruding dent 16 to form a further inner distance means. In summary, a total of three inner distance means is present.

Furthermore, and according to Fig. 3, the filter section 10 comprises adjacent to the open side 11 close to the end sections 14, 15 each one radially outwards protruding dent 18 to form said outer distance means. Finally, Fig. 3 shows that adjacent to the open side 11 the filter element 9 is bent in a radial outward direction to form mounting bevels 32. Said mounting bevels 32 allow a snap-on mounting of the filter element 9 onto the valve base body 4 without contact of the potential sharp free filter ends.

Fig. 4 shows a further embodiment of the filter element 9 as an alternative to the embodiment of Fig. 3, wherein the inward protruding dent 16 of Fig. 3 is replaced by a radially inwards protruding bend 22 to form an inner distance means, and wherein the outwards protruding dents 18 of Fig. 3 are replaced by radially outwards protruding bends 23 to form the outer distance means. The inward bends 31 and the mounting bevels 32 adjacent to the open side 11 are kept without alterations. Both embodiments of Figs. 3, 4 are preferably manufactured either as a stamped and bend sheet metal part or as a molded plastic part.

Fig. 5 shows in an enlarged side view the valve base body 4 of Figs. 1, 2 in the vicinity of the delivery section 8. It can be seen that the delivery section 8 is delimited in the direction of the longitudinal axis 3 on one side by a first shoulder 19 and on the opposing end face side by a second shoulder 20, wherein both shoulders 19, 20 are integrally formed as part of the base body 4. The filter element 9 is held in the axial direction between the two shoulders 19, 20. Thereby, a positive locking form fit of the filter element 9 on the outer side of the valve base body 4 is generated, which keeps the filter element 9 safely in place. However, due to the elastic deformable C-shape the filter element 9 may be easily clipped on or off the base body 4.

As shown in Fig. 5, the filter section 10 of the filter element 9 has a first axial length l₁. From the inner side of the first shoulder 19 to the adjacent inner side of the second shoulder 20 the delivery section 8 has a second axial length l₂. The first axial length l₁ of the filter section 10 is less than the second axial length l₂ of the delivery section 8, which allows for some axial play of the filter element 9 between the two shoulders 19, 20. This axial play leaves an axial gap with a first axial gap width c being less than or equal to the difference between said first and second axial length l₁, l₂, thereby forming a narrow filter gap. The first axial gap width c is preferably in the range from including 0,02 mm to including 0,18 mm.

The filter section 10 of the filter element 9 is embodied as a gap filter with multiple individual gaps 21 extending in the circumferential direction. The gaps have a second axial gap width d being in the range from including 0,05 mm to including 0,15 mm.

Now reference is made again to Fig. 6, showing the valve arrangement of Fig. 1 in a front view. It can be seen, that the positioning protrusions 13 engage with the open side 11 of the filter element 9, thereby forcing the filter element 9 in a certain mounting position relative to the circumferential direction. Radially inwards the filter element 9 is in contact with the valve base body 4 only by means of the two radially inwards protruding bends 31 and on the opposite side by means of the radially inwards protruding dent 16. Apart from these inner distant means the filter element section 10 of the filter element 9 has an inner radial distance a allowing a free fuel flow between the inner side of the filter section 10 and the circumferential surface 1 of the valve base body 4. The inner radial distance a is preferably in a range from including 0,1 mm to including 0,4 mm.

Furthermore, the filter element 9 is prohibited from being bent open by means of the radially outwards protruding dents 18, which act as outer distance means, and which would get in contact with the inner circumferential wall 17 of the surrounding fuel valve housing 24. Apart from said outer distance means the filter section 10 of the filter element 9 has an outer radial distance b allowing for a free fuel flow from the fuel input channel 27 along the inner circumferential wall 17 of the valve housing 24 around the entire outer side of the filter section 10. The outer radial distance b is preferably in a range from including 0,1 mm to including 0,5 mm.

Aside from the open side 11 and the positioning protrusion 13, both the filter section 10 and the circumferential surface 12 are embodied in a partial cylindrical shape, thereby keeping both the inner and outer radial distances a, b constant in the circumferential direction. However, deviating shapes might be desirable within the invention.

## Claims

1. Electromagnetic fuel valve (2) in particular of a carburetor (1), comprising a valve base body (4) extending along a longitudinal axis (3) and having a generally circular cross section, further comprising at least one inlet channel (5) and at least one outlet channel (7), wherein a fuel guiding delivery section (8) with at least one inlet port (6) of the inlet channel (5) is formed on the outer side of the valve base body (4), and wherein the inlet port (6) is externally covered by a filter element (9),
**characterized in, that** the filter element (9) is embodied as a C-shaped part having a filter section (10) and an open side (11), and being externally snapped onto the delivery section (8).

2. The fuel valve according to claim 1,
**characterized in, that** the fuel guiding delivery section (8) comprises a circumferential surface (12) having the at least one inlet port (6) and being enclosed by the filter section (10) of the filter element (9), that a positioning protrusion (13) radially elevates above the circumferential surface (12), and that the positioning protrusion (13) engages with the open side (11) of the C-shaped filter element (9).

3. The fuel valve according to claim 1 or 2,
**characterized in, that** the filter section (10) and the circumferential surface (12) are embodied in a partial cylindrical shape.

4. The fuel valve according to one of claims 1 to 3,
**characterized in, that** the filter section (10) of the filter element (9) is kept in an inner radial distance (a) to the circumferential surface (12) by inner distance means.

5. The fuel valve according to claim 4,
**characterized in, that** adjacent to the open side (11) and on both sides thereof the filter element (9) comprises each one end section (14, 15) encompassing the filter section (10) in the circumferential direction, and that in the range of the end sections (14, 15) the filter element (6) comprises at least one and preferably two radially inwards protruding bends (31) to form two inner distance means.

6. The fuel valve according to claim 4 or 5,
**characterized in, that** opposite to the open side (11) the filter section (10) comprises a radially inwards protruding dent (16) to form an inner distance means.

7. The fuel valve according to claim 4 or 5,
**characterized in, that** opposite to the open side (11) the filter section (10) comprises a radially inwards protruding bend (22) to form an inner distance means.

8. The fuel valve according to one of claims 4 to 7,
**characterized in, that** a total of three inner distance means is present.

9. The fuel valve according to one of claims 1 to 8,
**characterized in, that** the filter section (10) of the filter element (9) comprises outer distance means for keeping an outer radial distance (b) to an inner circumferential wall (17) of a surrounding fuel valve housing (24).

10. The fuel valve according to claim 9,
**characterized in, that** in particular adjacent to the open side (11) the filter section (10) comprises at least one and preferably two radially outwards protruding dents (18) to form the outer distance means.

11. The fuel valve according to claim 9,
**characterized in, that** in particular adjacent to the open side (11) the filter element (9) comprises at least one and preferably two radially outwards protruding bends (23) to form the outer distance means.

12. The fuel valve according to one of claims 1 to 11,
**characterized in, that** the delivery section (8) is delimited in axial direction by two shoulders (19, 20) between which the filter element (9) is held, wherein a first axial length (l₁) of the filter section (10) of the filter element (9) is less than a second axial length (l₂) of the delivery section (8) by a first axial gap width (c).

13. The fuel valve according to one of claims 1 to 12,
**characterized in, that** the filter section (10) of the filter element (9) is embodied as a gap filter with individual filter gaps (21).

14. The fuel valve according to claim 13,
**characterized in, that** the filter gaps (21) have a second axial gap width (d) being in a range from including 0,05 mm to including 0,15 mm.

15. The fuel valve according to one of claims 1 to 14,
**characterized in, that** adjacent to the open side (11) the filter element (9) is bent radially outwards to form a mounting bevel (32).

16. The fuel valve according to one of claims 1 to 15,
**characterized in, that** the C-shaped filter element (9) is embodied as a bent sheet metal part.

17. The fuel valve according to one of claims 1 to 15,
**characterized in, that** the C-shaped filter element (9) is embodied as a molded plastic part.
